(19) Europäisches Patentamt
European Patent Office
Office européen des brevets

(11) Veröffentlichungsnummer : **0 058 638**
**B1**

(12) # EUROPÄISCHE PATENTSCHRIFT

(45) Veröffentlichungstag der Patentschrift : **28.08.85**

(51) Int. Cl.⁴ : **C 08 K 5/42**, C 08 L 61/00, C 09 D 3/48

(21) Anmeldenummer : **82810055.2**

(22) Anmeldetag : **08.02.82**

(54) **Härtbare Zusammensetzung auf Basis eines säurehärtbaren Harzes und Verfahren zu dessen Härtung.**

(30) Priorität : **13.02.81 CH 973/81**

(43) Veröffentlichungstag der Anmeldung : **25.08.82 Patentblatt 82/34**

(45) Bekanntmachung des Hinweises auf die Patenterteilung : **28.08.85 Patentblatt 85/35**

(84) Benannte Vertragsstaaten : **BE DE FR GB IT**

(56) Entgegenhaltungen :
**FR-A- 2 125 962**
**FR-A- 2 358 453**

(73) Patentinhaber : **CIBA-GEIGY AG**
**Postfach**
**CH-4002 Basel (CH)**

(72) Erfinder : **Kirchmayr, Rudolf, Dr.**
**Ettingerstrasse 9**
**CH-4147 Aesch (CH)**
Erfinder : **Berner, Godwin, Dr.**
**Waldhofstrasse 70**
**CH-4310 Rheinfelden (CH)**



Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die Erfindung betrifft Zusammensetzungen auf Basis eines säurehärtbaren Harzes enthaltend einen maskierten Härtungskatalysator sowie ein Verfahren zur Härtung dieses Harzes durch Bestrahlung mit kurzwelligem Licht und anschliessendes Erwärmen. Die Erfindung betrifft weiterhin die Verwendung dieser Zusammensetzungen.

Säurehärtbare Harze werden vor allem als Bindemittel für Lacke, Druckfarben und Anstrichstoffe verwendet, wenn hohe Einbrenntemperaturen vermieden werden sollen. Säurehärtbare Harze können Aminoharze sein, einschliesslich verätherte, veresterte oder anderweitig modifizierte Melaminharze, Harnstoff-Formaldehydharze, Phenol-Formaldehydharze sowie Gemische solcher Harze mit Alkyd-, Polyester- oder Acrylharzen. Weitere säurehärtbare Harze sind Methylol-Verbindungen, Methyloläther von Polycarbonsäureamiden, z. B. Derivate von Polyacryl- oder -methacrylsäure, Urethanalkyde sowie Harze, die Carbonsäureester von N-Methylolamiden enthalten. Säure-polymerisierbare oder säurehärtbare ethylenisch ungesättigte Materialien können auch verwendet werden, wie N-Methylol-acrylamid, Vinylcarbazol, Vinyläther, Diketen und Diacetonacrylamid. Als saure Härtungskatalysatoren werden vorwiegend organische Säuren verwendet, wie Sulfonsäuren, insbesondere p-Toluol-sulfonsäure, Halbester von Phthal- oder Maleinsäure, oder Phosphorsäure und ihre Partialester. Da diese Säuren bereits bei Raumtemperatur eine langsame Härtung bewirken, werden sie dem Harz erst kurz vor dessen Applikation zugesetzt, was mit den bekannten Problemen der Einhaltung bestimmter Topfzeiten verbunden ist. Zur Ermöglichung von Einkomponenten-Systemen hat man daher bereits die Verwendung maskierter Härtungskatalysatoren vorgeschlagen, aus denen bei erhöhter Temperatur die Säure in Freiheit gesetzt wird. Beispiele hierfür sind Aminsalze des Säuren, beispielsweise die in der US-Patentschrift 3 474 054 vorgeschlagenen Pyridinsalze von aromatischen Sulfonsäuren.

Diese und andere Salze haben den Nachteil, dass sie entweder bereits während der Lagerung eine langsame Härtung bewirken oder dass sie sehr hohe Härtungstemperaturen oder sehr lange Härtungszeiten benötigen. Ausserdem entstehen dabei Geruchsprobleme.

Es wurde weiterhin in der US-Patentschrift 4 102 687 vorgeschlagen, aromatische Sulfoniumsalze von komplexen Anionen, wie z. B. von $BF_4^-$, $PF_6^-$, $SbF_6^-$ oder $AsF_6^-$, als maskierte Härtungskatalysatoren zu verwenden, aus denen durch Bestrahlung mit UV-Licht der eigentliche Härtungskatalysator gebildet wird. Dasselbe Prinzip lässt sich gemäss DE-OS-2 602 574 auch mit aromatischen Jodoniumsalzen verwirklichen. Solche Sulfonium- oder Jodoniumsalze sind jedoch schwierig in reiner Form herzustellen, sie sind von geringer Reaktivität und neigen zur Vergilbung der Harze. Es besteht daher ein Bedarf an in technischem Masstab einfach herstellbaren Verbindungen, die bei Bestrahlung mit kurzwelligem Licht schnell unter Bildung eines hochreaktiven Härtungskatalysators für säurehärtbare Harze zerfallen.

Es wurde gefunden, dass Sulfonsäureester bestimmter cyclischer Hydroxamsäurederivate, die technisch einfach herstellbar sind, diese Anforderungen erfüllen, indem sie im Dunkeln unbegrenzt lagerbar sind, bei Belichtung mit kurzwelligem Licht jedoch rasch unter Bildung von Sulfonsäuren zerfallen, die eine anschliessende säurekatalytische Härtung der Harze bei relativ niedriger Temperatur ermöglichen und nicht zur Vergilbung der Harze neigen.

Gegenstand der Erfindung ist eine härtbare Zusammensetzung enthaltend ein säurehärtbares Harz und als maskierten Härtungskatalysator eine Verbindung der Formel I oder II,

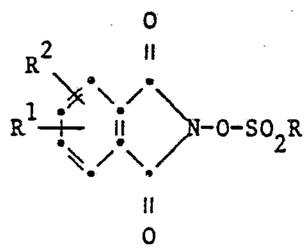

(I)

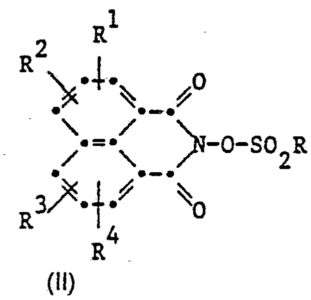

(II)

worin R $C_1$-$C_{18}$ Alkyl, unsubstituiertes oder durch $C_1$-$C_{12}$ Alkyl, Halogen, $C_1$-$C_4$ Alkyl-CONH—, Phenyl-CONH—, $NO_2$ oder $C_1$-$C_4$ Alkoxy substituiertes Phenyl, unsubstituiertes oder durch $C_1$-$C_{12}$ Alkyl oder Halogen substituiertes Naphthyl, $C_5$-$C_6$ Cycloalkyl, Campheryl, $CF_3$, $CCl_3$, $CH_2Cl$, F oder $NH_2$ und $R^1$, $R^2$, $R^3$ und $R^4$ unabhängig voneinander Wasserstoff, $C_1$-$C_8$ Alkyl, $C_1$-$C_4$ Alkoxy, $C_1$-$C_{12}$ Alkylthio, Phenylthio, $NO_2$ oder Halogen bedeuten.

Bevorzugt ist als Härtungskatalysator eine Verbindung der Formel I oder II, worin R $C_1$-$C_{18}$ Alkyl, F, $CF_3$, $CCl_3$, unsubstituiertes oder mit $C_1$-$C_{12}$ Alkyl, Cl oder $CH_3CONH$— substituiertes Phenyl oder Naphthyl, Campheryl und $R^1$, $R^2$, $R^3$ und $R^4$ unabhängig voneinander Wasserstoff, $C_1$-$C_4$ Alkyl, $C_1$-$C_4$ Alkoxy oder $C_1$-$C_4$ Alkylthio bedeuten.

Die Verbindungen der Formel I sind Derivate des N-Hydroxy-phthalimides, die Verbindungen der Formel II sind Derivate des N-Hydroxynaphthalimides. Sie können hergestellt werden aus den entsprechenden N-Hydroxyphthalimiden oder N-Hydroxynaphthalimiden durch Veresterung mit den entsprechenden Sulfonsäuren oder deren Säurechloriden oder Anhydriden gemäss den für solche Verbindungen bekannten Methoden, wie sie in den Annalen *616*, 183 (1958) und im Journal of Organic Chemistry *20*, 33 (1955) und *38*, 3908 (1973) beschrieben sind.

Beispiele für einzelne Verbindungen der Formel I sind :

N-Phenylsulfonyloxy-phthalimid
N-p-Tolylsulfonyloxy-phthalimid
N-Methylsulfonyloxy-phthalimid
N-Hexadecylsulfonyloxy-phthalimid
N-Trifluormethylsulfonyloxy-phthalimid
N-Fluorsulfonyloxy-phthalimid
N-Chlormethylsulfonyloxy-phthalimid
N-Trichlormethylsulfonyloxy-phthalimid
N-Butylsulfonyloxy-phthalimid
N-Dodecylsulfonyloxy-phthalimid
N-Naphthylsulfonyloxy-phthalimid
N-2,4,5-Trichlorphenylsulfonyloxy-phthalimid
N-2,4,6-Trimethylphenylsulfonyloxy-phthalimid
N-2,4,6-Triisopropylphenylsulfonyloxy-phthalimid
N-Cyclohexylsulfonyloxy-phthalimid
N-4-Nitrophenylsulfonyloxy-phthalimid
N-4-Chlorphenylsulfonyloxy-phthalimid
N-4-Acetylaminophenylsulfonyloxy-phthalimid
N-4-Methoxyphenylsulfonyloxy-phthalimid
N-p-Tolylsulfonyloxy-3-nitro-phthalimid
N-Methylsulfonyloxy-3-nitro-phthalimid
N-p-Tolylsulfonyloxy-4-nitro-phthalimid
N-p-Tolylsulfonyloxy-4-methyl-phthalimid
N-p-Tolylsulfonyloxy-3-äthylthio-phthalimid
N-Phenylsulfonyloxy-4-chlor-phthalimid.

Beispiele für einzelne Verbindungen der Formel II sind :

N-p-Tolylsulfonyloxy-naphthalimid
N-Methylsulfonyloxy-naphthalimid
N-Dodecylsulfonyloxy-naphthalimid
N-Butylsulfonyloxy-naphthalimid
N-Trifluormethylsulfonyloxy-naphthalimid
N-Fluorsulfonyloxy-naphthalimid
N-Nonylnaphthylsulfonyloxy-naphthalimid
N-p-Dodecylphenylsulfonyloxy-naphthalimid
N-Phenylsulfonyloxy-naphthalimid
N-Campher-10-sulfonyloxy-naphthalimid
N-Trichlorphenylsulfonyloxy-naphthalimid
N-2,4,6-Triisopropylsulfonyloxy-naphthalimid
N-Aethyl-sulfonyloxy-naphthalimid
N-p-Chlorsulfonyloxy-naphthalimid
N-Xylylsulfonyloxy-naphthalimid.

Die erfindungsgemässen Härtungskatalysatoren werden den Harzen in einer für die Härtung ausreichenden Menge zugesetzt. Die benötigte Menge hängt nicht nur von der Art des Harzes sondern auch von der beabsichtigten Härtungstemperatur und Härtungszeit ab. Im allgemeinen verwendet man 0,1 bis 10 Gew.-%, vorzugsweise 0,5 bis 5 Gew.-%, bezogen auf das lösungsmittelfreie Harz.

Als Harze kommen alle Harze in Frage, deren Härtung durch saure Katalysatoren beschleunigt werden kann. Das sind bei- spielsweise Acryl-, Polyester-, Alkyd-, Melamin-, Harnstoff- und Phenolharze, insbesondere aber die Mischungen von Acryl-, Polyesteroder Alkyldharzen untereinander oder mit einem Melaminharz. Darunter fallen auch modifizierte Lackharze wie z. B. acrylmodifizierte Polyester- oder Alkydharze. Beispiele für einzelne Typen von Harzen, die unter den Begriff Acryl-, Polyester- und Alkydharze fallen, sind z. B. in Wagner, Sarx/Lackkunstharze (München, 1971) Seiten 86 bis 123 und 229 bis 238, oder in Ullman/Encyclopädie der techn. Chemie, 4. Auflage, Band 15 (1978), Seiten 613 bis 628, beschrieben. Von besonderer Bedeutung ist die saure Katalyse für die Härtung von Lacken, die verätherte Aminoharze enthalten, wie z. B. methylierte oder butylierte Melaminharze (N-Methoxymethyl- bzw. N-Butoxymethylmelamin) oder methylierte/butylierte Glycolurile wie z. B. die Verbindung der folgenden Formel :

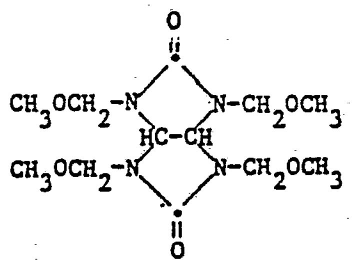

Für bestimmte Zwecke verwendet man auch Harzzusammensetzungen, die monomere oder oligomere Bestandteile mit polymerisationsfähigen ungesättigten Gruppen haben. Auch solche Harzzusammensetzungen sind nach dem erfindungsgemässen Verfahren härtbar. Hierbei können zusätzlich radikalische Polymerisationsinitiatoren oder Photoinitiatoren mitverwendet werden. Erste initieren die Polymerisation der ungesättigten Gruppen während der Wärmebehandlung, letztere während der UV-Bestrahlung. Man kann solche Harzzusammensetzungen mit ungesättigten Komponenten auch durch Elektronenstrahlen polymerisieren. Zusätzlich zur Polymerisation der ungesättigten Komponenten muss aber stets eine sauer katalysierte Vernetzung erfolgen.

Die Lacke können Lösungen oder Dispersionen des Lackharzes in einem organischen Lösungsmittel oder in Wasser sein, sie können aber auch lösungsmittelfrei sein. Von besonderem Interesse sind Lacke mit geringem Lösungsmittelanteil, sogenannte « high solids-Lacke ». Die Lacke können Klarlacke sein, wie sie z. B. in der Automobilindustrie als Decklacke von Mehrschichten-Anstrichen verwendet werden. Sie können auch Pigmente enthalten, seien es anorganische oder organische Pigmente, sowie Metallpigmente für Metalleffekt-Lacke.

Die Lacke können weiterhin kleinere Mengen an speziellen Zusätzen enthalten, wie sie in der Lacktechnologie üblich sind, beispielsweise Verlaufshilfsmittel, Thixotropiemittel, Lichtschutzmittel oder Antioxydantien.

Beispiele für Lichtschutzmittel sind solche aus der Klasse der Hydroxyphenyl-benztriazole, Hydroxybenzophenone, Cyanacrylate, Hydroxyphenyltriazine, Oxalanilide, organischen Nickelverbindungen oder der Polyalkylpiperidinderivate. Da Lichtschutzmittel vom UV-Absorber-Typ die erfindungsgemässe UV-Bestrahlung stören können, kann man solche Lichtschutzmittel auch einer angrenzenden Lackschicht zusetzen, aus der sie dann allmählich in die zu schützende Schicht des Einbrennlackes eindiffundieren. Die angrenzende Lackschicht kann eine Grundierung unter dem Einbrennlack oder ein Decklack über dem Einbrennlack sein.

Eine weitere Möglichkeit den störenden Einfluss vom UV-Absorber zu umgehen besteht in der Verwendung von sogenannten « geblockten UV-Absorbern » wie sie z. B. in der DE-OS-2 648 367 beschrieben sind. Ebenfalls geeignet sind Produkte, die unter Photo-Fries-Umlagerung UV-Absorber bilden wie z. B. Resorcinmonobenzoat.

Bevorzugt werden Polymethylpiperidinderivate bzw. Kombinationen derselben mit (geblockten) UV-Absorbern.

Die folgenden erfindungsgemässen Zusammensetzungen stellen weitere spezielle Vorzugsformen der Erfindung dar :

a) Zusammensetzung, welche als Harz ein Aminoharz oder ein Gemisch eines Aminoharzes mit einem anderen Harz oder ein methyl-aminogruppen-haltiges Harz ist.

b) Zusammensetzung, welche als säurehärtbares Harz ein Phenol-Formaldehydharz oder ein Gemisch eines solchen Harzes mit einem anderen säurehärtbaren Harz enthält.

c) Zusammensetzung, welche als Grundharz ein Gemisch aus Acrylaten und Melaminharzen (Hybridsystem) und zusätzlich radikalische Polymerisationsinitiatoren oder Photoinitiatoren enthält.

d) Zusammensetzung, welche als säurehärtbares Harz folgendes Gemisch enthält :

| | |
|---|---|
| Hexamethoxymethylmelamin | 17,93 Gewichtsteile |
| Butylacetat | 9,73 Gewichtsteile |
| Celluloseacetobutyrat | 1,83 Gewichtsteile |
| ein Silikonharz in organischen Lösungsmitteln | 2,80 Gewichtsteile |
| ein Verlaufsmittel auf Polymerbasis | 0,29 Gewichtsteile |
| ein hydroxylfunktionelles Acrylharz | 57,30 Gewichtsteile |
| n-Butanol | 10,12 Gewichtsteile |
| | 100,00 Gewichtsteile |

e) Zusammensetzung, welche ausser dem Harz und dem Härtungskatalysator noch sonstige, in der Technologie der Harze übliche Zusatzstoffe enthält.

f) Zusammensetzung, welche zusätzlich eine oder mehrere äthylenisch ungesättigte Verbindungen enthält.

g) Zusammensetzung gemäss f), enthaltend zusätzlich einen Photoinitiator aus der Klasse der aromatischen Ketone.

h) Zusammensetzung enthaltend als Härtungskatalysator eine Verbindung der Formel

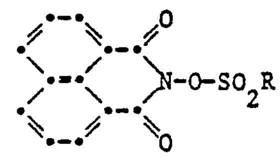

in der

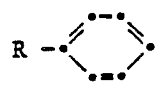

oder $-CH_3$ oder $-C_4H_9$ oder $-C_{12}H_{25}$ oder $-C_{16}H_{33}$

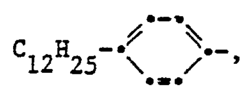

vorzugsweise $-C_4H_9$ oder $-C_{12}H_{25}$, bedeutet.

i) Zusammensetzung enthaltend zusätzlich 0,1-5 Gew.-% Hydrochinon oder 2,6-Di-tert.-butyl-4-methylphenol oder Bisphenol-A.

k) Zusammensetzung enthaltend zusätzlich 0,1-2 Gew.-% Phenanthrenchinon.

Die Erfindung betrifft weiterhin ein Verfahren zur Härtung von säurehärtbaren Harzen in Gegenwart von Härtungskatalysatoren der Formel I oder II durch Bestrahlen mit kurzwelligem Licht und anschliessendes Erwärmen.

Die Bestrahlung des Harzes mit kurzwelligem Licht geschieht vorzugsweise mit UV-Licht, wofür es heute eine Anzahl geeigneter technischer Geräte gibt. Diese enthalten Quecksilber-mitteldruck-, hochdruck- oder -niederdrucklampen sowie Leuchtstoffröhren, deren Emissions- maxima bei 250 bis 400 nm liegen. Die nötigen Bestrahlungszeiten hängen ab von der Schichtdicke des Harzes, von der Pigmentierung, von der Lichtstärke der Lampen und von der Distanz der Lampen. Ein unpigmentierter Lack in üblicher Schichtdicke benötigt in üblichen UV-Bestrahlungsgeräten einige Sekunden Belichtungszeit. In dieser Zeit hat sich der latente Katalysator unter Bildung von freier Sulfonsäure photochemisch umgewandelt.

Setzt man dem Harz Photosensibilisatoren zu, so kann man die Bestrahlung auch mit Tageslichtlampen durchführen. Beispiele für bekannte Photosensibilisatoren sind kondensierte Aromaten wie z. B. Perylen, aromatische Amine (wie sie z. B. im US-Patent 4 069 054 beschrieben sind) oder kationische und basische Farbstoffe (wie sie z. B. im US-Patent 4 026 705 beschrieben sind).

Da die Säurehärtung bei Raumtemperatur sehr langsam abläuf, ist es für eine technische Ausübung des Verfahrens nötig, an die Bestrahlung eine Temperaturbehandlung anzuschliessen. Diese kan jedoch im Unterschied zu anderen Verfahren mit wärmespaltbaren Härtungskatalysatoren bei relativ niedrigen Temperaturen durchgeführt werden. Bei einer Einbrenndauer von etwa 30 Minuten und Verwendung von etwa 2 % Katalysator genügen Einbrenntemperaturen von 70 bis 80 °C. Bei Verwendung von 1 % Katalysator benötigt man Temperaturen von 80 bis 100 °C und bei Verwendung von 0,5 % Katalysator etwa 100 bis 120 °C. Vorzugsweise härtet man die erfindungsgemäss katalysierten Harze nach der Bestrahlung bei Temperaturen unterhalb 130 °C. Demgegenüber benötigt man für die Härtung mit bekannten Aminsalzen von Sulfonsäuren (ohne Bestrahlung) manchmal auch Einbrenntemperaturen von über 130 °C.

Diese relativ niedrigen Einbrenntemperaturen des erfindungsgemässen Verfahrens sind von erheblicher technischer Bedeutung bei der Beschichtung oder Lackierung von temperaturempfindlichen Substraten. Beispiel hierfür sind Gegenstände aus Holz oder Karton, insbesondere aber Gegenstände, die Teile aus Kunststoffen oder Kautschuken enthalten, beispielsweise elektrische Geräte, Fahrzeuge aller Art oder Maschinen.

Ein weiterer Vorteil gegenüber anderen Einkomponenten-Harzen, die einen Härtungskatalysator enthalten, ist, dass die erfindungsgemässen Einkompoonentensysteme bei Raumtemperatur praktisch unbegrenzt lagerfähig sind, da sich der wirksame Katalysator erst bei der Bestrahlung bildet.

Das erfindungsgemässe Verfahren ist für alle Arten der industriellen Beschichtung und Lackierung geeignet, wie z. B. für die Lackierung von Maschinen, Fahrzeugen, Schiffen oder Konstruktionsteilen. Von besonderer Bedeutung ist es für die Automobil-Lackierung. Hierbei kann es sowohl in Einschicht-Lackierung wie Mehrschicht-Lackierung angewendet werden. Von besonderem Interesse ist auch die Anwendung des Verfahrens für die kontinuierliche Beschichtung von Blechen, beispielsweise Stahl- oder Aluminiumblechen, nach dem sogenannten Coil-Coat-Verfahren. Das Verfahren eignet sich zudem für die Härtung von säurehärtbaren Druckfarben, die sich wegen ihrer hervorragenden Tiefziehfähigkeit besonders für den Blechdruck eignen.

Bei der Anwendung des erfindungsgemässen Verfahrens auf Pressmassen, Giess- und Laminierharzen können die Harze zuerst in dünner Schicht bestrahlt und anschliessend zu beliebigen Gegenständen heiss verformt und gehärtet werden. Soweit es sich jedoch um Gegenstände von relativ niedriger Dicke handelt, können die Harze auch zuerst verformt und anschliessend bestrahlt und erwärmt

werden. Die Schichtdicke kann bei der Bestrahlung der Harze, je nach deren Transparenz mehrere Millimeter betragen. Eine weitere Anwendungsmöglichkeit findet das Verfahren bei der Herstellung von Relief-Formen, wie z. B. Druckplatten. Hierbei erfolgt zunächst eine Belichtung der festen oder flüssigen säurehärtbaren Harzzusammensetzung, die auch ungesättigte Monomere/Präpolymere sowie Photoinitiatoren oder Polymerisationsinitiatoren enthalten kann, durch einen Negativfilm. Anschliessend erfolgt gegebenenfalls eine thermische Nachbehandlung wobei die belichteten Stellen vernetzt werden. Zum Schluss wird die Druckplatte durch Auswaschen der unvernetzten Teile entwickelt. Entsprechend lassen sich Druckplatten für den Hochdruck, Flexodruck oder Offsetdruck herstellen.

Die folgenden Beispiele erläutern das Verfahren anhand spezifischer erfindungsgemässer Zusammensetzungen näher. Hierin bedeuten Teile Gewichtsteile und % Gewichtsprozente. Die Temperaturen sind in Celsius-Graden angegeben.

## Beispiel 1

Härtung eines Lackes auf Basis von Acryl-Melamin-Harz.

Aluminiumbleche von 0,5 mm Dicke, die mit einem weisspigmentierten Grundlack auf Basis Polyesterharz beschichtet waren, werden mit einem festkörperreichen Klarlack der folgenden Zusammensetzung beschichtet:

53,7 Teile Acrylharz (Paraloid® OL 42, Rohm & Haas Co., USA)
19,3 Teile Melaminharz (Cymel® 301, Amer. Cyanamide Co.)
1,9 Teile Celluloseacetobutyrat (CAB 551, Eastman Chem. Co.)
10,6 Teile n-Butanol
10,5 Teile Butylacetat
3,0 Teile Verlaufshilfsmittel (Byketol® Spezial, Byk-Mallinckrodt)
0,4 Teile Verlaufshilfsmittel (Modaflow® Monsanto Comp.)
0,6 Teile Härtungskatalysator.

Der Katalysator wird in einem Teil des Butanols vorgelöst. Der Lack hat einen Gehalt von 62,1 % Festkörper (Bindemittel). Die Katalysatormenge entspricht daher 1 %, bezogen auf lösungsmittelfreies Bindemittel.

Der Lack wird mit einem elektrischen Filmziehgerät so aufgetragen, dass die Trockenfilmstärke etwa 30 µm beträgt. Nach einer Ablüftzeit von 15 Minuten werden die Proben in einem UV-Bestrahlungsgerät (QC-Processor) der Fa. PPG (USA) mit 2 Hochdruckquecksilberdampflampen von 80 Watt einer UV-Bestrahlung unter Variation der Bestrahlungszeit ausgesetzt. Anschliessend werden die Proben in einem Lackofen 30 Minuten bei 100 °C eingebrannt.

Zur Beurteilung des Härtungsgrades wird die Pendelhärte des Lackfilmes nach der Methode von König (DIN 53 157) bestimmt, und zwar 30 Minuten nach dem Einbrennen.

Zur Beurteilung der Verfärbung (Vergilbung) wird der Farbtonabstand ΔE gemäss DIN 6174 bestimmt. Die Resultate sind in Tabelle 1 aufgeführt.

Tabelle 1

| Katalysator | Bestrahlungszeit (sec.) | Pendelhärte (sec.) | Farbtonabstand ΔE |
|---|---|---|---|
| N-Methylsulfonyloxyphthalimid | 2,1 | 102 | 1,9 |
| | 4,2 | 113 | 3,0 |
| | 12,6 | 120 | 5,2 |
| | 25,2 | 120 | 6,4 |
| N-Phenylsulfonyloxyphthalimid | 2,1 | 69 | 1,1 |
| | 4,2 | 83 | 1,5 |
| | 12,6 | 86 | 2,6 |
| | 25,2 | 87 | 3,8 |
| N-p-Tolylsulfonyloxyphthalimid | 2,1 | 81 | 1,4 |
| | 4,2 | 95 | 2,0 |
| | 12,6 | 106 | 3,6 |
| | 25,2 | 106 | 5,0 |

Ausserdem wird die Lagerstabilität der Lackproben durch Messung der Viskosität mit dem ICI Kegel-Platte-Viskosimeter während 7-tägiger Lagerung bei 60 °C überprüft.

Bei dieser Methode wird die Viskosität in Poise gemessen. In Tabelle 2 ist die Differenz dieser Viskosität ($\Delta\eta$) zur Viskosität einer katalysatorfreien Lackprobe angegeben.

Tabelle 2

| Katalysatoren | Viskositätsdifferenz $\Delta\eta$ in Pa.s nach 0 | 1 | 2 | 3 | 4 | 7 Tagen Lagerung 60 °C |
|---|---|---|---|---|---|---|
| N-Methylsulfonyloxy-phthalimid | 0,25 | 0,13 | 0,23 | 0,23 | 0,32 | 0,29 |
| N-Phenylsulfonyloxy-phthalimid | 0 | 0,04 | 0,06 | 0,06 | 0,05 | 0,05 |
| N-p-Tolylsulfonyloxy-phthalimid | 0 | 0,02 | 0,07 | 0,07 | 0,04 | 0,05 |

## Beispiel 2

Die in nachstehender Tabelle 3 angeführten Verbindungen werden als Katalysatoren in den in Beispiel 1 beschriebenen festkörperreichen Klarlack eingearbeitet (Katalysator-Menge : 0,6 Teile). Die Prüfung erfolgt wie in Beispiel 1.

Tabelle 3

Katalysator | Bestrahlungszeit (sec.) | Pendelhärte (sec.) | Farbtonabstand ΔE | Viskositätsdifferenz in Pa.s nach 0 | 1 | 2 | 3 | 4 | 7 Tagen Lagerung
Katalysator | Bestrahlungszeit (sec.) | Pendelhärte (sec.) | Farbtonabstand ΔE | Viskositätsdifferenz in Pa.s nach 0 | 1 | 2 | 3 | 4 | 7 Tagen Lagerung

| Katalysator | Bestrahlungszeit (sec.) | Pendelhärte (sec.) | Farbtonabstand $\Delta E$ | Viskositätsdifferenz in Pa.s nach 0 | 1 | 2 | 3 | 4 | 7 Tagen Lagerung |
|---|---|---|---|---|---|---|---|---|---|
| N-Trifluorsulfonyl-oxyphthalimid | 0 | 24 | 1,1 | | | | | | |
| | 2,1 | 79 | 2,1 | | | | | | |
| | 4,2 | 88 | 2,5 | | | | | | |
| | 12,6 | 83 | 4,2 | | | | | | |
| | 25,2 | 82 | 5,4 | 0 | 0,1 | 0,12 | 0,12 | 0,08 | 0,1 |
| N-Campher-10-sulfonyloxy-phthalimid | 0 | — | — | | | | | | |
| | 2,1 | 56 | 1,5 | | | | | | |
| | 4,2 | 85 | 1,7 | | | | | | |
| | 12,6 | 92 | 2,9 | | | | | | |
| | 25,2 | 95 | 4,3 | 0 | 0,03 | 0,04 | 0,03 | 0,05 | 0,04 |
| N-Naphthalin-2-sulfonyloxy-phthalimid | 0 | — | — | | | | | | |
| | 2,1 | — | — | | | | | | |
| | 4,2 | 4 | 1,5 | | | | | | |
| | 12,6 | 25 | 2,2 | | | | | | |
| | 25,2 | 41 | 3,0 | 0 | 0,02 | 0,02 | 0,06 | 0,02 | 0,1 |

Tabelle 3 (Fortsetzung)

| | | | | | | | | | |
|---|---|---|---|---|---|---|---|---|---|
| N-Phenylsulfonyl-oxynaphthalimid | 0 | — | — | | | | | | |
| | 2,1 | 38 | 3,2 | | | | | | |
| | 4,2 | 58 | 4,9 | | | | | | |
| | 12,6 | 70 | 8,1 | | | | | | |
| | 25,2 | 71 | 10,8 | 0 | − 0,02 | − 0,02 | 0,04 | − 0,02 | − 0,01 |
| N-Methylsulfonyl-oxynaphthalimid | 0 | — | — | | | | | | |
| | 2,1 | 22 | 2,8 | | | | | | |
| | 4,2 | 40 | 4,2 | | | | | | |
| | 12,6 | 49 | 7,0 | | | | | | |
| | 25,2 | 57 | 9,3 | 0 | − 0,03 | − 0,02 | 0,02 | − 0,06 | − 0,01 |
| N-p-Tolylsulfonyl-oxynaphthalimid | 0 | — | — | | | | | | |
| | 2,1 | 6 | 2,5 | | | | | | |
| | 4,2 | 18 | 3,6 | | | | | | |
| | 12,6 | 22 | 5,5 | | | | | | |
| | 25,2 | 31 | 7,6 | 0,1 | − 0,03 | − 0,01 | 0 | − 0,03 | 0 |
| N-2,4,5-Trichlorphenylsulfonyloxy-phthalimid | 0 | — | — | | | | | | |
| | 2,1 | 39 | 1,8 | | | | | | |
| | 4,2 | 56 | 2,0 | | | | | | |
| | 12,6 | 70 | 2,8 | | | | | | |
| | 25,2 | 84 | 4,1 | 0 | 0,06 | 0,07 | 0,09 | 0,08 | 0,08 |
| N-2,4,6-Triisopropyl-phenyl-sulfonyl-oxy-phthalimid | 0 | — | — | | | | | | |
| | 2,1 | 18 | 1,9 | | | | | | |
| | 4,2 | 38 | 2,2 | | | | | | |
| | 12,6 | 58 | 3,1 | | | | | | |
| | 25,2 | 60 | 3,6 | 0 | 0,01 | 0 | 0,04 | 0,02 | 0,04 |
| N-p-Chlorphenylsulfonyloxy-phthalimid | 0 | — | — | | | | | | |
| | 2,1 | 59 | 2,2 | | | | | | |
| | 4,2 | 73 | 2,4 | | | | | | |
| | 12,6 | 90 | 3,7 | | | | | | |
| | 25,2 | 93 | 5,0 | 0 | 0,04 | 0,04 | 0,08 | 0,08 | 0,08 |

## Beispiel 3

Es wird die folgende Grundharzformulierung zugrunde gelegt :

| | |
|---|---|
| Hexamethoxymethylmelamin (Cymel 301®, 100 %) | 17,93 g |
| Butylacetat | 9,73 g |
| Celluloseacetobutyrat (CAB 551 001® der Firma Eastman Chem.) | 1,83 g |
| Silikonharz in organischem Lösungsmittel (Verlaufshilfsmittel Byketol Spezial® der Firma ByK-Mallinckrodt) | 2,80 g |
| Verlaufshilfsmittel auf Polymer-Basis (Modaflow®, 1 % lsg. ; Monsanto) | 0,29 g |
| Hydroxylfunktionelles Acrylharz (Paraloid AT 410® 73 % ; Rohm + Haas) | 57,30 g |
| n-Butanol | 10,12 g |
| | 100,00 g |

Die in Tabelle 4 angeführten Verbindungen werden in einer Konzentration von 1 Gew.-% in dieses Grundharz eingearbeitet. Die Prüfung erfolgt wie in Beispiel 1 beschrieben. Die Ergebnisse sind in Tabelle 4 dargestellt. Dabei wird die Viskositätsänderung Δ % zum Anfangswert der Gesamtharzformulierung angegeben.

Tabelle 4

Katalysator | Belichtungszeit in sec. | Pendelhärte in sec. | Farbtonabstand ΔE | Lagerstabilität nach Tagen bei 60 °C Oben : Pa.s bei 20 °C Unten : Δ% auf Anfangswert 0 1 2 3 4 7

Katalysator | Belichtungszeit in sec. | Pendelhärte in sec. | Farbtonabstand ΔE | Lagerstabilität nach Tagen bei 60 °C Oben : Pa.s bei 20 °C Unten : Δ% auf Anfangswert 0 1 2 3 4 7

Katalysator | Belichtungszeit in sec. | Pendelhärte in sec. | Farbtonabstand ΔE | Lagerstabilität nach Tagen bei 60 °C Oben : Pa.s bei 20 °C Unten : Δ% auf Anfangswert 0 1 2 3 4 7

Katalysator | Belichtungszeit in sec. | Pendelhärte in sec. | Farbtonabstand ΔE | Lagerstabilität nach Tagen bei 60 °C Oben : Pa.s bei 20 °C Unten : Δ% auf Anfangswert 0 1 2 3 4 7

| Katalysator | Belichtungszeit in sec. | Pendelhärte in sec. | Farbtonabstand ΔE | Lagerstabilität nach Tagen bei 60 °C<br>Oben : Pa.s bei 20 °C<br>Unten : Δ% auf Anfangswert | | | | | |
|---|---|---|---|---|---|---|---|---|---|
| | | | | 0 | 1 | 2 | 3 | 4 | 7 |
| N-Tolylsulfonyloxy-2-thiophenyl-phthalimid | 0 | 7 | 2,1 | 0,30 | 0,36 | 0,43 | 0,53 | 0,64 | 0,38 |
| | 2,1 | 25 | 2,3 | | 20 | 43 | 77 | 113 | 227 |
| | 4,2 | 29 | 2,5 | | | | | | |
| | 8,2 | 38 | 2,8 | | | | | | |
| | 12,6 | 49 | 2,7 | | | | | | |
| N-Aethylsulfonyloxy-phthalimid | 0 | 15 | 0,1 | 0,09 | 0,43 | 0,60 | 0,81 | 0,99 | 1,36 |
| | 2,1 | 49 | 0,4 | | 48 | 107 | 179 | 241 | 369 |
| | 4,2 | 31 | 0,6 | | | | | | |
| | 8,2 | 132 | 0,9 | | | | | | |
| | 12,6 | 153 | 1,3 | | | | | | |
| N-Aethylsulfonyloxy-naphthalimid | 0 | 3 | 0,1 | 0,30 | 0,33 | 0,32 | 0,32 | 0,34 | 0,38 |
| | 2,1 | 119 | 2,7 | | 10 | 7 | 7 | 13 | 37 |
| | 4,2 | 158 | 5,0 | | | | | | |
| | 8,2 | 175 | 3,3 | | | | | | |
| | 12,6 | 183 | 11,7 | | | | | | |
| N-Campher-10-sulfonyloxy-naphthalimid | 0 | 15 | 0,4 | 0,30 | 0,30 | 0,31 | 0,32 | 0,33 | 0,36 |
| | 2,1 | 109 | 3,0 | | 0 | 3 | 7 | 10 | 20 |
| | 4,2 | 153 | 5,9 | | | | | | |
| | 8,2 | 174 | 3,5 | | | | | | |
| | 12,6 | 185 | 11,2 | | | | | | |
| N-p-Chlorphenylsulfonyloxy-naphthalimid | 0 | 13 | 0,5 | 0,30 | 0,31 | 0,32 | 0,34 | 0,34 | 0,39 |
| | 2,1 | 66 | 1,4 | | 3 | 7 | 13 | 13 | 30 |
| | 4,2 | 101 | 2,5 | | | | | | |
| | 8,2 | 178 | 4,2 | | | | | | |
| | 12,6 | 198 | 5,6 | | | | | | |

Tabelle 4 (Fortsetzung)

| | | | | | | | | | |
|---|---|---|---|---|---|---|---|---|---|
| N-Phenylsulfonyloxy-naphthalimid | 0 | 11 | 0,2 | 0,28 | 0,31 | 0,32 | 0,36 | 0,34 | 0,38 |
| | 2,1 | 94 | 1,8 | | 11 | 14 | 29 | 21 | 36 |
| | 4,2 | 141 | 3,4 | | | | | | |
| | 8,2 | 165 | 5,9 | | | | | | |
| | 12,6 | 174 | 7,7 | | | | | | |
| N-Xylylsulfonyloxy-phthalimid | 0 | 7 | 0,7 | 0,29 | 0,33 | 0,43 | 0,59 | 0,69 | 1,12 |
| | 2,1 | 49 | 0,8 | | 14 | 48 | 103 | 138 | 286 |
| | 4,2 | 89 | 0,8 | | | | | | |
| | 8,2 | 139 | 1,9 | | | | | | |
| | 12,6 | 150 | 2,1 | | | | | | |
| N-3-Nitrophenylsulfonyloxy-phthalimid | 0 | 13 | 0,4 | 0,23 | 0,50 | 0,86 | 0,83 | 0,96 | 1,10 |
| | 2,1 | 29 | 1,0 | | 72 | 197 | 186 | 231 | 383 |
| | 4,2 | 49 | 1,3 | | | | | | |
| | 8,2 | 80 | 2,1 | | | | | | |
| | 12,6 | 108 | 3,0 | | | | | | |
| N-n-Butylsulfonyloxy-phthalimid | 0 | 7 | 0,3 | 0,29 | 0,34 | 0,46 | 0,66 | 0,79 | 1,16 |
| | 2,1 | 50 | 0,6 | | 17 | 59 | 128 | 155 | 330 |
| | 4,2 | 88 | 1,1 | | | | | | |
| | 8,4 | 137 | 1,5 | | | | | | |
| | 12,6 | 162 | 2,0 | | | | | | |
| N-n-Octylsulfonyloxy-phthalimid | 0 | 7 | 0,4 | 0,26 | 0,30 | 0,37 | 0,49 | 0,59 | 0,88 |
| | 2,1 | 42 | 0,7 | | 15 | 42 | 88 | 127 | 233 |
| | 4,2 | 77 | 0,8 | | | | | | |
| | 8,4 | 127 | 1,3 | | | | | | |
| | 12,6 | 152 | 1,9 | | | | | | |
| N-n-Decylsulfonyloxy-phthalimid | 0 | 4 | 0,4 | 0,28 | 0,32 | 0,42 | 0,54 | 0,60 | 1,04 |
| | 2,1 | 32 | 0,7 | | 14 | 50 | 93 | 136 | 271 |
| | 4,2 | 62 | 0,3 | | | | | | |
| | 8,4 | 112 | 1,1 | | | | | | |
| | 12,6 | 146 | 1,5 | | | | | | |
| N-n-Butylsulfonyloxy-naphthalimid | 0 | 4 | 0,5 | 0,29 | 0,32 | 0,31 | 0,32 | 0,31 | 0,38 |
| | 2,1 | 81 | 2,8 | | 10 | 7 | 10 | 7 | 31 |
| | 4,2 | 137 | 5,0 | | | | | | |
| | 8,4 | 163 | 8,7 | | | | | | |
| | 12,6 | 172 | 11,6 | | | | | | |
| N-n-Octyl-sulfonyloxy-naphthalimid | 0 | 3 | 0,6 | 0,29 | 0,30 | 0,32 | 0,32 | 0,32 | 0,36 |
| | 2,1 | 71 | 2,8 | | 3 | 10 | 10 | 10 | 24 |
| | 4,2 | 114 | 5,1 | | | | | | |
| | 8,4 | 148 | 8,6 | | | | | | |
| | 12,6 | 154 | 11,4 | | | | | | |
| N-n-Decylsulfonyloxy-naphthalimid | 0 | 4 | 0,4 | 0,20 | 0,30 | 0,31 | 0,31 | 0,30 | 0,35 |
| | 2,1 | 69 | 2,5 | | 3 | 7 | 7 | 3 | 21 |
| | 4,2 | 112 | 4,4 | | | | | | |
| | 8,4 | 155 | 7,6 | | | | | | |
| | 12,6 | 165 | 10,3 | | | | | | |

(Fortsetzung Seite 11)

Beispiel 4

Im folgenden Versuch wird die nachstehende Weisslackrezeptur zugrundegelegt.

Rezeptur für einen weisspigmentierten « Acryl-Melamin High-Solid Lack ».

| | |
|---|---|
| Acryloid AT 400® (Hydroxylfunktionelles Acrylharz ; Rohm + Haas) (75 % in MAK) | 39,0 Gew.-% |
| Cymel 301® | 9,75 Gew.-% |
| Kronos RN 57® ($TiO_2$ der Firma Kronos) | 26,0 Gew.-% |
| n-Butanol | 5,25 Gew.-% |
| Methyl-amylketon (MAK) | 20,0 Gew.-% |
| | 100,0 Gew.-% |

In dieses Grundharz werden verschiedene geblockte Säurekatalysatoren, sowie Co-Katalysatoren eingearbeitet. Anschliessend werden die Weisslacke mit einer Rakel auf mit einem Coil-coat beschichtete Aluminiumbleche aufgezogen, so dass sich (nach Einbrennen) eine Trockenfilmstärke von ca. 30 μ ergibt. Nach kurzer Abluftzeit werden die Proben unter Leuchtstoffröhren Phillips TLK 40 W/09 10 Minuten lang bestrahlt und anschliessend 30' bei 120 °C eingebrannt. Nach 30' Lagerzeit wir die Pendelhärte nach Koenig vermessen. Die Versuchsergebnisse sind in der Tabelle 5 zusammengestellt.

Tabelle 5

| Säurekatalysator | Co-Katalysator | Pendelhärte nach 10' Bestrahlen und Einbrennen |
|---|---|---|
| Verbindung der Formel 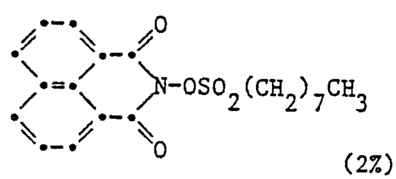 (2%) | ohne | 27 |
| Dito | 1% Hydrochinon | >100 |
| Dito | 0,5% Phenanthrenchinon | >100 |
| Dito | 1% 2,6-Di-tert.butyl-4-methylphenol (BHT) | 85 |
| Dito | 1% Pentaerythrityl-tetrakis-[3-(3,5-di-tert.butyl-4-hydroxyphenyl)-propionat] | 70 |
| Dito | 1,0% Hydrochinon<br>0,5% Phenanthrenchinon | >100 |

Die Zusatzmenge an Katalysatoren beziehen sich auf Bindemittel fest.

**Patentansprüche**

1. Härtbare Zusammensetzung, enthaltend ein säurehärtbares Harz und als maskierten Härtungskatalysator eine Verbindung der Formel I oder II

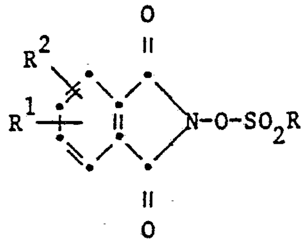

(I)

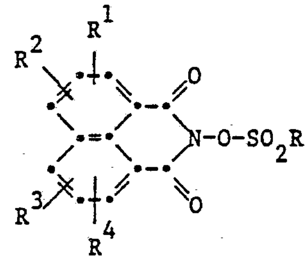

(II)

worin R $C_1$-$C_{18}$ Alkyl, unsubstituiertes oder durch $C_1$-$C_{12}$ Alkyl, Halogen, $C_1$-$C_4$ Alkyl-CONH—, Phenyl-CONH—, $NO_2$ oder $C_1$-$C_4$ Alkoxy substituiertes Phenyl, unsubstituiertes oder durch $C_1$-$C_{12}$ Alkyl oder Halogen substituiertes Naphthyl, $C_5$-$C_6$ Cycloalkyl, Campheryl, $CF_3$, $CCl_3$, $CH_2Cl$, F oder $NH_2$ und $R^1$, $R^2$, $R^3$ und $R^4$ unabhängig voneinander Wasserstoff, $C_1$-$C_8$ Alkyl, $C_1$-$C_4$ Alkoxy, $C_1$-$C_{12}$ Alkylthio, Phenylthio, $NO_2$ oder Halogen bedeuten.

2. Zusammensetzung gemäss Anspruch 1, worin der Härtungskatalysator eine Verbindung der Formel I oder II ist, worin R $C_1$-$C_{18}$ Alkyl, F, $CF_3$, $CCl_3$, unsubstituiertes oder mit $C_1$-$C_{12}$ Alkyl, Chlor oder $CH_3CONH$— substituiertes Phenyl oder Naphthyl, Campheryl und $R^1$, $R^2$, $R^3$ und $R^4$ unabhängig voneinander Wasserstoff, $C_1$-$C_4$ Alkyl, $C_1$-$C_4$ Alkoxy oder $C_1$-$C_4$ Alkylthio bedeuten.

3. Zusammensetzung gemäss Anspruch 2, enthaltend einen Härtungskatalysator der Formel I, worin R, $R^1$ und $R^2$ die in Anspruch 2 gegebene Bedeutung haben.

4. Zusammensetzung gemäss Anspruch 2, enthaltend einen Härtungskatalysator der Formel II, worin R, $R^1$, $R^2$, $R^3$ und $R^4$ die im Anspruch 2 gegebene Bedeutung haben.

5. Zusammensetzung gemäss Anspruch 1, dadurch gekennzeichnet, dass sie 0,1 bis 10 Gew.-%, bezogen auf das lösungsmittelfreie Harz, eines Härtungskatalysators der Formel I oder II enthält.

6. Zusammensetzung gemäss Anspruch 1, dadurch gekennzeichnet, dass das Harz ein Aminoharz oder ein Gemisch eines Aminoharzes mit einem anderen Harz oder ein methyl-aminogruppenhaltiges Harz ist.

7. Zusammensetzung gemäss Anspruch 1, dadurch gekennzeichnet, dass sie als säurehärtbares Harz ein Phenol-Formaldehydharz oder ein Gemisch eines solchen Harzes mit einem anderen säurehärtbaren Harz enthält.

8. Zusammensetzung gemäss Anspruch 1, dadurch gekennzeichnet, dass sie zusätzlich eine oder mehrere äthylenisch ungesättigte Verbindungen enthält.

9. Zusammensetzung gemäss Anspruch 8, dadurch gekennzeichnet, dass sie als Grundharz ein Gemisch aus Acrylaten und Melaminharzen (Hybridsysteme) und zusätzlich radikalische Polymerisationsinitiatoren oder Photoinitiatoren enthält.

10. Zusammensetzung gemäss Anspruch 8, dadurch gekennzeichnet, dass sie zusätzlich einen Photoinitiator aus der Klasse der aromatischen Ketone enthält.

11. Zusammensetzung gemäss Anspruch 1, dadurch gekennzeichnet, dass sie ausser dem Harz und dem Härtungskatalysator noch sonstige, in der Technologie der Harze übliche Zusatzstoffe enthält.

12. Zusammensetzung gemäss Anspruch 11, dadurch gekennzeichnet, dass sie zusätzlich 0,1-5 Gew.% Hydrochinon oder 2,6-Di-tert.-butyl-4-methylphenol oder Bisphenol-A enthält.

13. Zusammensetzung gemäss Anspruch 11, dadurch gekennzeichnet, dass sie zusätzlich 0,1-2 Gew.% Phenanthrenchinon enthält.

14. Zusammensetzung gemäss Anspruch 1, dadurch gekennzeichnet, dass der Härtungskatalysator eine Verbindung der Formel

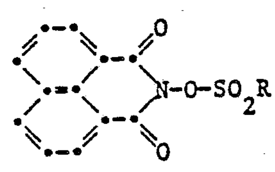

ist, in der

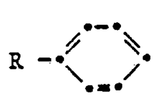

oder $—CH_3$ oder $—C_4H_9$ oder $—C_{12}H_{25}$, $—C_{16}H_{33}$ oder

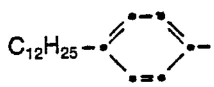,

vorzugsweise $-C_4H_9$ oder $-C_{12}H_{25}$, bedeutet.

15. Verfahren zum Härten von säurehärtbaren Harzen, die einen Härtungskatalysator gemäss Anspruch 1 enthalten, dadurch gekennzeichnet, dass man das Harz mit kurzwelligem Licht bestrahlt und anschliessend erwärmt.

16. Verfahren gemäss Anspruch 15, dadurch gekennzeichnet, dass man das Erwärmen bei Temperaturen unterhalb 130 °C durchführt.

17. Verwendung einer Zusammensetzung des Anspruches 1 als Industrielack, insbesondere als Blechdruckfarbe.

18. Verwendung einer Zusammensetzung gemäss Anspruch 1 zur Herstellung einer Relief-Form.

**Claims**

1. A curable composition, comprising an acid-curable resin and, as a blocked curing catalyst, a compound of the formula I or II

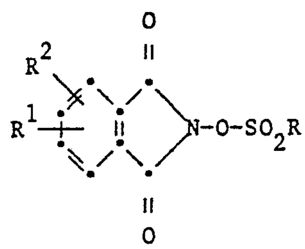

(I)

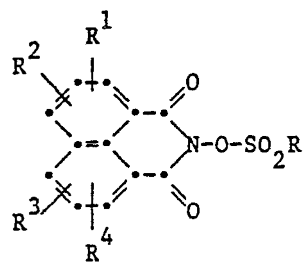

(II)

in which R is $C_1$-$C_{18}$ alkyl, phenyl which is unsubstituted or substituted by $C_1$-$C_{12}$ alkyl, halogen, $C_1$-$C_4$ alkyl-CONH—, phenyl-CONH—, $NO_2$ or $C_1$-$C_4$ alkoxy, or is naphthyl which is unsubstituted or substituted by $C_1$-$C_{12}$ alkyl or halogen, or is $C_5$-$C_6$ cycloalkyl, camphoryl, $CF_3$, $CCl_3$, $CH_2Cl$, F or $NH_2$ and $R^1$, $R^2$, $R^3$ and $R^4$ are independently hydrogen, $C_1$-$C_8$ alkyl, $C_1$-$C_4$ alkoxy, $C_1$-$C_{12}$-alkylthio, phenylthio, $NO_2$ or halogen.

2. A composition according to claim 1, wherein the curing catalyst is a compound of the formula I or II, in which R is $C_1$-$C_{18}$ alkyl, F, $CF_3$, $CCl_3$, or phenyl or naphthyl which are unsubstituted or substituted by $C_1$-$C_{12}$-alkyl, chlorine or $CH_3CONH$—, or is camphoryl and $R^1$, $R^2$, $R^3$ and $R^4$ are independently hydrogen, $C_1$-$C_4$ alkyl, $C_1$-$C_4$ alkoxy or $C_1$-$C_4$ alkylthio.

3. A composition according to claim 2, which contains a curing catalyst of the formula I, in which R, $R^1$ and $R^2$ are as defined in claim 2.

4. A composition according to claim 2, which contains a curing catalyst of the formula II, in which R, $R^1$, $R^2$, $R^3$ and $R^4$ are as defined in claim 2.

5. A composition according to claim 1, which contains 0.1 to 10 % by weight, based on the solvent-free resin, of a curing catalyst of the formula I or II.

6. A composition according to claim 1, wherein the resin in an amino resin or a mixture of an amino resin with another resin, or is a resin containing methylamino groups.

7. A composition according to claim 1, which contains, as the acid-curable resin, a phenolic resin or a phenol/formaldehyde resin, or a mixture of such a resin with another acid-curable resin.

8. A composition according to claim 1, which additionally contains one or more ethylenically unsaturated compounds.

9. A composition according to claim 8, which contains, as the base resin, a mixture of an acrylate and a melamine resin (hybrid system) and, additionally, a free-radical polymerisation initiator or a photoinitiator.

10. A composition according to claim 8, which additionally contains a photoinitiator of the class of the aromatic ketones.

11. A composition according to claim 1, which, in addition to the resin and the curing catalyst, also contains further additives conventional in resin technology.

12. A composition according to claim 1, which additionally contains 0.1-5 % by weight of hydroquinone, 2,6-di-tert-butyl-4-methylphenol or bisphenol A.

13. A composition according to claim 1, which additionally contains 0.1-2 % by weight of phenanthrenequinone.

14. A composition according to claim 1, wherein the curing catalyst is a compound of the formula

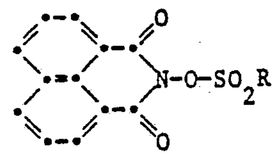

in which
R is

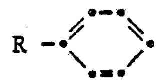

$-CH_3$, $-C_4H_9$, $-C_{12}H_{25}$, $-C_{16}H_{33}$ or

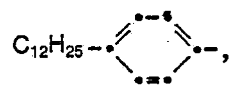

and preferably is $-C_4H_9$ or $-C_{12}H_{25}$.

15. A process for curing an acid-curable resin containing a curing catalyst according to claim 1, which comprises irradiating the resin with short-wave light and subsequently heating it.

16. A process according to claim 15, wherein the heating is carried out at temperatures below 130 °C.

17. Use of a composition according to claim 1 as an industrial surface coating, in particular as a tin plate ink.

18. Use of a composition according to claim 1 for the preparation of a relief form.

**Revendications**

1. Composition durcissable contenant une résine durcissable par un acide et, en tant que catalyseur de durcissement bloqué, un composé de formule I ou II

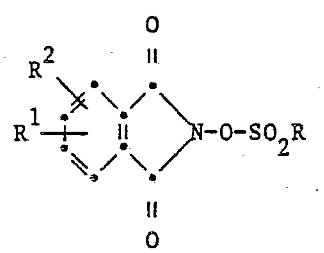

(I)

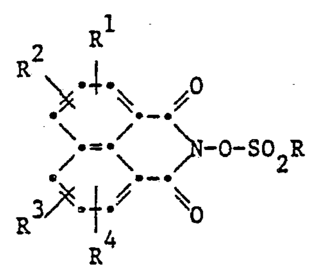

(II)

dans laquelle R représente un alkyle en $C_1$ à $C_{18}$, un phényle non substitué ou substitué par un alkyle en $C_1$ à $C_{12}$, un halogène, un alkyl $C_1$ à $C_4$-CONH—, un phényl-CONH—, $NO_2$ ou un alcoxy en $C_1$ à $C_4$, un naphtyle non substitué ou substitué par un alkyle en $C_1$ à $C_{12}$ ou un halogène, un cycloalkyle en $C_5$ à $C_6$, un camphéryle, $CF_3$, $CCl_3$, $CH_2Cl$, F ou $NH_2$ et $R^1$, $R^2$, $R^3$ et $R^4$ représentent, indépendamment les uns des autres, l'hydrogène, un alkyle en $C_1$ à $C_8$, un alcoxy en $C_1$ à $C_4$, un alkylthio en $C_1$ à $C_{12}$, un phénylthio, $NO_2$ ou un halogène.

2. Composition selon la revendication 1 dans laquelle le catalyseur de durcissement est un composé de formule I ou II où R représente un alkyle en $C_1$ à $C_{18}$, F, $CF_3$, $CCl_3$, un phényle non substitué ou substitué par un alkyle en $C_1$ à $C_{12}$, du chlore ou $CH_3CONH$— ou un naphtyle, un camphéryle et $R^1$, $R^2$, $R^3$ et $R^4$ représentent, indépendamment les uns des autres, l'hydrogène, un alkyle en $C_1$ à $C_4$, un alcoxy en $C_1$ à $C_4$ ou un alkylthio en $C_1$ à $C_4$.

3. Composition selon la revendication 2 contenant un catalyseur de durcissement de formule I dans laquelle R, $R^1$ et $R^2$ ont la signification indiquée dans la revendication 2.

4. Composition selon la revendication 2 contenant un catalyseur de durcissement de formule II dans laquelle R, $R^1$, $R^2$, $R^3$ et $R^4$ ont la signification indiquée dans la revendication 2.

5. Composition selon la revendication 1, caractérisée en ce qu'elle renferme 0,1 à 10 % en poids, par rapport à la résine sans solvant, d'un catalyseur de durcissement de formule I ou II.

6. Composition selon la revendication 1, caractérisée en ce que la résine est une résine aminée ou un mélange d'une résine aminée avec une autre résine ou une résine renfermant des groupes méthyl-amino.

7. Composition selon la revendication 1, caractérisée en ce qu'elle renferme en tant que résine

durcissable par un acide une résine phénol-formaldéhyde ou un mélange d'une telle résine avec une autre résine durcissable par un acide.

8. Composition selon la revendication 1, caractérisée en ce qu'elle renferme en outre un ou plusieurs composés éthyléniquement insaturés.

9. Composition selon la revendication 8, caractérisée en ce qu'elle renferme en tant que résine de base un mélange de résines acryliques et de mélamine (systèmes hybrides) et en supplément des amorceurs de polymérisation radicalaires ou des photo-amorceurs.

10. Composition selon la revendication 8, caractérisée en ce qu'elle renferme en outre un photo-amorceur de la classe des cétones aromatiques.

11. Composition selon la revendication 1, caractérisée en ce qu'elle renferme encore outre la résine et le catalyseur de durcissement, d'autres additifs courants dans la technologie des résines.

12. Composition selon la revendication 11, caractérisée en ce qu'elle renferme en outre 0,1 à 5 % en poids d'hydroquinone, de 2,6-di-tert-butyl-4-méthylphénol ou de bisphénol-A.

13. Composition selon la revendication 11, caractérisée en ce qu'elle renferme en outre 0,1 à 2 % en poids de phénanthrènequinone.

14. Composition selon la revendication 1, caractérisée en ce que le catalyseur de durcissement est un composé de formule

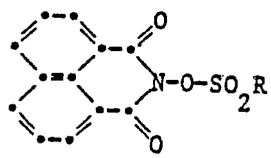

dans laquelle R représente

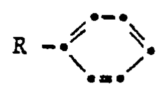

$-CH_3$, $-C_4H_9$, $-C_{12}H_{25}$, $-C_{16}H_{33}$ ou

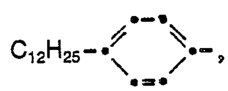

de préférence $-C_4H_9$ ou $-C_{12}H_{25}$.

15. Procédé pour le durcissement de résines durcisssables par des acides renfermant un catalyseur de durcissement selon la revendication 1, caractérisé en ce qu'on irradie la résine avec de la lumière de faible longueur d'onde et la chauffe ensuite.

16. Procédé selon la revendication 15, caractérisé en ce qu'on effectue le chauffage à des températures au-dessous de 130 °C.

17. Utilisation d'une composition de la revendication 1 comme laque industrielle, en particulier comme encre d'imprimerie pour tôles.

18. Utilisation d'une composition selon la revendication 1 pour la préparation d'une forme en relief.